# EUROPÄISCHE PATENTSCHRIFT

(11) **EP 1 286 092 B1**
(45) Veröffentlichungstag und Bekanntmachung des Hinweises auf die Patenterteilung: **19.05.2004**
(21) Anmeldenummer: 02016680.7
(22) Anmeldetag: 26.07.2002
(51) Int. Cl.: F16K 23/00

(54) **Ventil für flüssige Medien**
Valve for liquid medium
Soupape pour milieux liquides

(30) Priorität: 17.08.2001 DE 20113658 U
(43) Veröffentlichungstag der Anmeldung: 26.02.2003
(73) Patentinhaber: A. und K. Müller GmbH & Co. KG, 40595 Düsseldorf (DE)
(72) Erfinder: Glaus, Uwe, 40593 Düsseldorf (DE)
(74) Vertreter: Feder, Wolf-Dietrich, Dr. Dipl.-Phys.

(56) Entgegenhaltungen:
- CA-A- 1 128 404
- US-A- 1 846 446
- US-A- 4 481 970
- US-A- 5 379 985

## Beschreibung

Die Erfindung betrifft ein Ventil für flüssige Medien, insbesondere zur Abgabe von Heißwasser mit den Merkmalen aus dem Oberbegriff des Patentanspruchs 1.

Ein solches Ventil ist in Dokument US 1 846 446 offenbart.

Derartige Ventile sind allgemein bekannt und besitzen insbesondere bei ihrer Verwendung zur Abgabe von Heißwasser den Nachteil, daß nach dem Schließen des Ventils an der dem Ventilsitz zugekehrten Seite des Ventiltellers Wassertropfen zurückbleiben, die bei Verdunstung des Wassers zur Kalkablagerung führen, wodurch die Funktionsfähigkeit des Ventils beeinträchtigt wird.

Der Erfindung liegt die Aufgabe zugrunde, ein Ventil der erwähnten Bauart so auszugestalten, daß nach dem Schließen des Ventils am Ventilteller anhaftendes Wasser möglichst vollständig abgeführt wird, so daß die aufgrund der Verdunstung entstehende Kalkbildung erheblich reduziert wird.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, an der dem Ventilsitz zugekehrten Seite des Ventiltellers ein bewegliches Tropfenableitelement so anzuordnen, daß es in der Schließstellung des Ventiltellers an der Innenwand des Ausgangskanals anliegt, wodurch die am Ventilteller gegebenenfalls anhängenden Tropfen durch den Ausgangskanal abgeleitet werden. In der Öffnungsstellung des Ventiltellers stellt sich aufgrund der Strömungswirkung das bewegliche Tropfenableitelement in Strömungsrichtung ein, so daß es keinen nennenswerten Widerstand für das abströmende Medium darstellt.

Es hat sich als besonders vorteilhaft erwiesen, wenn das Tropfenableitelement stäbchenförmig ausgebildet ist und aus einem flexiblen Material, beispielsweise Kunststoffmaterial besteht. In diesem Falle kann es einstückig mit dem aus dem gleichen Material bestehenden Ventilteller verbunden sein.

Das Tropfenableitelement kann aber auch aus einem starren Material bestehen und über ein gelenkiges oder flexibles Verbindungselement am Ventilteller befestigt sein.

Im folgenden wird anhand der beigefügten Zeichnung ein Ausführungsbeispiel für ein Ventil nach der Erfindung näher erläutert.

In der Zeichnung zeigen:
Fig. 1 Teile eines Ventils in der Schließstellung;
Fig. 2 in einer Darstellung analog Fig. 1 die Teile des Ventils in der Öffnungsstellung.

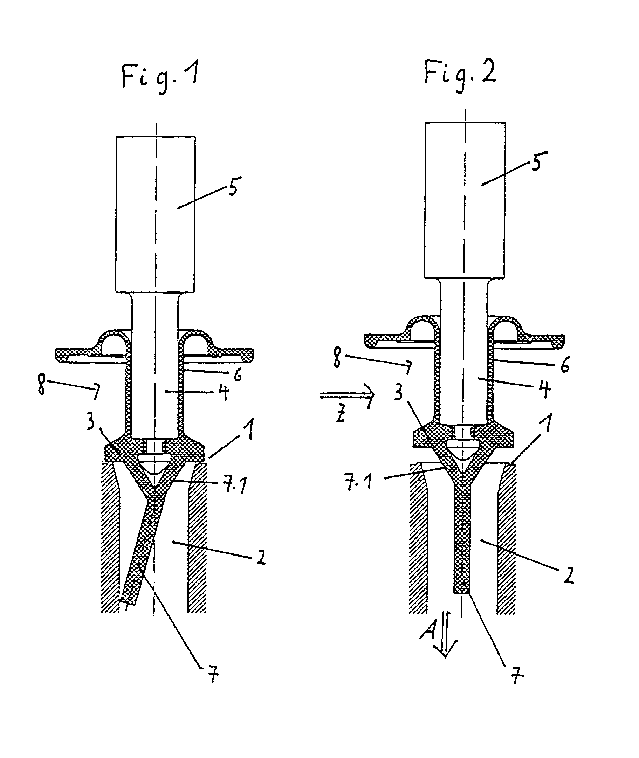

In den Zeichnungen sind nur die Teile eines Ventils für flüssige Medien dargestellt, die für die nachfolgende Beschreibung von Bedeutung sind. Innerhalb eines nicht dargestellten Ventilgehäuses ist eine Ventilkammer 8 angeordnet, die direkt mit einem nicht dargestellten Ventileingang und über einen Ventilsitz 1 und einen Ausgangskanal 2 mit einem ebenfalls nicht dargestellten Ventilausgang verbunden ist. In der Ventilkammer ist ein dem Ventilsitz 1 gegenüberliegender Ventilteller 3 angeordnet, der aus Kunststoffmaterial besteht und über einen Ventilschaft 4 mit einem Plunger 5 verbunden ist, der Teil eines nicht dargestellten elektromagnetischen Betätigungsteils ist. Der Ventilteller 3 ist einerseits an der vom Ventilsitz 1 abgewandten Seite einstückig mit einer Membran 6 verbunden, deren Außenrand dichtend mit dem Ventilgehäuse verbunden ist und durch die das Eindringen des Mediums in den Betätigungsteil verhindert wird. An der dem Ventilsitz zugewandten Seite des Ventiltellers 3 ist einstückig ein Tropfenableitelement angeordnet, das aus dem gleichen flexiblen Kunststoffmaterial wie der Ventilteller 3 selbst besteht. Das Tropfenableitelement ist als länglicher, stäbchenförmiger Körper 7 ausgebildet, der über ein Verbindungsstück 7.1 mit der dem Ventilsitz 1 zugewandten Seite des Ventiltellers 3 verbunden ist. Hierbei ist durch die Formgebung und die Länge sowie die Ausrichtung des Körpers 7 gegenüber dem Ventilteller 3 erreicht, daß in der in Fig. 1 dargestellten Schließstellung des Ventiltellers 3 der Körper 7 unter einem vorgegebenen spitzen Winkel zur Strömungsrichtung A des Mediums in der in Fig. 2 dargestellten Öffnungsstellung steht. Dabei liegt das dem Ventilausgang zugewandte freie Ende des Körpers 7 an der Innenwand des Ausgangskanals 2 an. Durch diese Ausbildung werden in der Schließstellung am Ventilteller 3 anhaftende Tropfen am Körper 7 entlang ablaufen, um dann an der Wand des Ausgangskanals 2 entlang durch den Ventilsausgang abzufließen. In der in Fig. 2 dargestellten Öffnungsstellung des Ventiltellers 3 strömt das Heißwasser in Pfeilrichtung Z in die Ventilkammer 8 ein und gelangt zwischen Ventilteller 3 und Ventilsitz 1 hindurch in den Ausgangskanal 2, in dem es in Pfeilrichtung A zum Ventilausgang abströmt. Wie Fig. 2 zu entnehmen, wird durch die Strömungswirkung der längliche Körper 7 des Tropfenableitelements in Strömungsrichtung, also im vorliegenden Falle in axialer Richtung des Ausgangskanals 2 ausgerichtet.

## Patentansprüche

1. Ventil für flüssige Medien, insbesondere zur Abgabe von Heißwasser, mit einem Ventilgehäuse, in dem eine Ventilkammer angeordnet ist, die direkt an einen Ventileingang und über einen Ventilsitz und einen Ausgangskanal mit einem Ventilausgang verbunden ist und in der ein dem Ventilsitz gegenüberliegender, zwischen einer Öffnungsstellung und einer Schließstellung, in welcher er dichtend auf dem Ventilsitz aufsitzt, bewegbarer Ventilteller angeordnet ist, **dadurch gekennzeichnet, daß** innerhalb des Ausgangskanals (2) im Fließweg des Mediums im Bereich zwischen Ventilsitz (1) und Ventilausgang ein Tropfenableitelement angeordnet ist, welches als länglicher Körper (7) ausgebildet ist, der an der dem Ventilsitz (1) zugewandten Seite des Ventiltellers (3) derart beweglich befestigt und ausgerichtet ist und eine solche axiale Länge aufweist, daß er mindestens in der Schließstellung des Ventiltellers (3) unter einem vorgegebenen spitzen Winkel zur Strömungsrichtung des Mediums in der Öffnungsstellung steht und sein dem Ventilausgang zugewandtes freies Ende an der Innenwand des Ausgangskanals (2) anliegt.

2. Ventil nach Anspruch 1, **dadurch gekennzeichnet, daß** der längliche Körper (7) stäbchenförmig ausgebildet ist.

3. Ventil nach Anspruch 2, **dadurch gekennzeichnet, daß** der längliche Körper (7) aus einem flexiblen Material besteht.

4. Ventil nach Anspruch 3, **dadurch gekennzeichnet, daß** der längliche Körper (7) aus dem gleichen Material wie der Ventilteller (3) besteht und einstükkig mit ihm verbunden ist.

5. Ventil nach Anspruch 4, **dadurch gekennzeichnet, daß** der Ventilteller (3) und der längliche Körper (7) aus Kunststoffmaterial bestehen.

6. Ventil nach Anspruch 2, **dadurch gekennzeichnet, daß** der längliche Körper (7) aus einem starren Material besteht und über ein gelenkiges oder flexibles Verbindungselement am Ventilteller befestigt ist.

7. Ventil nach einem der Ansprüche 1 bis 6, **dadurch gekennzeichnet, daß** der längliche Körper (7) derart ausgestaltet und am Ventilteller (3) befestigt ist, daß er in der Öffnungsstellung durch die Strömungskräfte des Mediums im wesentlichen in Strömungsrichtung (A) ausgerichtet wird.

## Claims

1. Valve for liquid media, in particular for delivering hot water, having a valve housing in which there is arranged a valve chamber which is directly connected to a valve inlet and is connected, via a valve seat and an outlet channel, to a valve outlet and in which chamber there is arranged a valve disc which is opposite the valve seat and is movable between an open position and a closed position in which it is sealingly seated on the valve seat, **characterised in that** there is arranged inside the outlet channel (2), in the flow path of the medium, in the region between valve seat (1) and valve outlet a drop-discharging element designed as an elongate body (7) which, on the side of the valve disc (3) facing the valve seat (1), is movably fastened and oriented in such a way, and is of such an axial length, that at least in the closed position of the valve disc (3) it is at a predetermined acute angle to the flow direction of the medium in the open position and its free end facing the valve outlet lies against the inner wall of the outlet channel (2).

2. Valve according to Claim 1, **characterised in that** the elongate body (7) is of rod-shaped design.

3. Valve according to Claim 2, **characterised in that** the elongate body (7) consists of a flexible material.

4. Valve according to Claim 3, **characterised in that** the elongate body (7) consists of the same material as the valve disc (3) and is integrally connected to it.

5. Valve according to Claim 4, **characterised in that** the valve disc (3) and the elongate body (7) consist of plastic material.

6. Valve according to Claim 2, **characterised in that** the elongate body (7) consists of a rigid material and is fastened to the valve disc via an articulated or flexible connecting element.

7. Valve according to one of Claims 1 to 6, **characterised in that** the elongate body (7) is configured and fastened to the valve disc (3) in such a way that in the open position the flow forces of the medium cause it to be oriented substantially in the flow direction (A).

## Revendications

1. Soupape pour milieux ou agents liquides, notamment destinée à la distribution d'eau chaude, comprenant un carter ou corps de soupape dans lequel est agencée une chambre de soupape qui est reliée directement à une entrée de soupape, et, par l'intermédiaire d'un siège de soupape et d'un canal de sortie, à une sortie de soupape, et dans laquelle est disposé un disque d'obturation de soupape, placé en regard du siège de soupape et pouvant être déplacé entre une position d'ouverture et une position de fermeture pour laquelle il s'appuie de manière étanche sur le siège de soupape, **caractérisée en ce qu'**à l'intérieur du canal de sortie (2), dans le parcours d'écoulement du milieu ou agent considéré, dans la zone entre le siège de soupape (1) et la sortie de soupape, est disposé un élément déflecteur de gouttes réalisé sous forme de corps allongé (7) qui est fixé de façon mobile sur le côté du disque d'obturation de soupape (3), dirigé vers le siège de soupape (1), et est orienté de manière telle, et présente une longueur axiale telle, qu'au moins dans la position de fermeture du disque d'obturation de soupape (3), il forme un angle aigu prédéterminé par rapport à la direction d'écoulement du milieu ou agent dans la position d'ouverture, et que son extrémité libre dirigée vers la sortie de soupape, s'appuie sur la paroi intérieure du canal de sortie (2).

2. Soupape selon la revendication 1, **caractérisée en ce que** le corps allongé (7) est réalisé sous forme de bâtonnet.

3. Soupape selon la revendication 2, **caractérisée en ce que** le corps allongé (7) est réalisé en un matériau flexible.

4. Soupape selon la revendication 3, **caractérisée en ce que** le corps allongé (7) est réalisé dans le même matériau que le disque d'obturation de soupape (3) et est relié d'un seul tenant à celui-ci.

5. Soupape selon la revendication 4, **caractérisée en ce que** le disque d'obturation de soupape (3) et le corps allongé (7) sont réalisés en matière plastique.

6. Soupape selon la revendication 2, **caractérisée en ce que** le corps allongé (7) est réalisé en un matériau rigide et est fixé au disque d'obturation de soupape, par l'intermédiaire d'un élément de liaison articulé ou flexible.

7. Soupape selon l'une des revendications 1 à 6,
**caractérisée en ce que** le corps allongé (7) est d'une configuration telle, et est fixé au disque d'obturation de soupape de manière telle, que dans la position d'ouverture, il est orienté par les forces d'écoulement du milieu ou de l'agent considéré, sensiblement dans la direction d'écoulement (A).
